# EUROPÄISCHE PATENTSCHRIFT

(11) **EP 1 739 395 B1**
(45) Veröffentlichungstag und Bekanntmachung des Hinweises auf die Patenterteilung: **14.12.2016**
(21) Anmeldenummer: 06012138.1
(22) Anmeldetag: 13.06.2006
(51) Int. Cl.: G01D 5/38, G01D 5/347

(54) **Positionsmesseinrichtung**
Position measuring device
Dispositif de mesure de position

(30) Priorität: 28.06.2005 DE 102005029917
(43) Veröffentlichungstag der Anmeldung: 03.01.2007
(73) Patentinhaber: Dr. Johannes Heidenhain GmbH, 83301 Traunreut (DE)
(72) Erfinder: Holzapfel, Wolfgang, 83119 Obing (DE)

(56) Entgegenhaltungen:
- EP-A1- 0 645 608
- EP-A2- 0 679 870
- WO-A1-02/23131
- WO-A1-89/05964

## Beschreibung

Die vorliegende Erfindung betrifft eine Positionsmesseinrichtung gemäß dem Oberbegriff des Anspruchs 1.

Eine derartige Positionsmesseinrichtung ist z.B. aus der WO 02/23131 bekannt. Diese umfasst neben einer Maßverkörperung, z.B. ausgebildet als linearer Auflicht-Maßstab, eine relativ in mindestens einer Messrichtung hierzu verschiebbare Abtasteinheit. Auf Seiten der Abtasteinheit ist neben einem Abtastgitter, mehreren optoelektronischen Detektorelementen u.a. auch mindestens ein optisches Reflektorelement in Form eines Retroreflektors angeordnet. Über den Retroreflektor erfolgt eine Rückreflexion der von der Maßverkörperung erstmalig reflektierten Teilstrahlenbündel in Richtung der Maßverkörperung. Dort werden die Teilstrahlenbündel dann anschließend ein zweites Mal reflektiert, bevor schließlich interferierende Teilstrahlenbündel auf die Detektoren gelangen und dort verschiebungsabhängig modulierte Abtastsignale erzeugen. Das Reflektorelement ist in der gattungsgemäßen Positionsmesseinrichtung als Dachkantprisma mit optischer Retroreflektor-Funktionalität ausgebildet. Weitere Positionsmesseinrichtungen mit als prismenartigen Retroreflektorelementen ausgebildeten optischen Reflektorelementen sind etwa aus den Druckschriften EP 387 520 B1 oder EP 1 347 271 A1 bekannt.

Die aus dem Stand der Technik für Positionsmesseinrichtungen bekannten Reflektorelemente auf Basis verschiedener Prismenvarianten stellen relativ aufwändig zu fertigende Bauelemente dar. Hinzu kommt, dass diese Bauelemente relativ groß bauen und damit eine unerwünschte Vergrößerung der Abtasteinheit resultiert.

Eine weitere optische Positionsmesseinrichtung ist aus der EP 0 645 608 A1 bekannt. Diese basiert auf einem Dreigitter-Abtastprinzip und schlägt diverse Maßnahmen vor, um die Wellenfronten interferierender Teilstrahlenbündel geeignet zu verformen; angestrebt wird darüber eine möglichst große Montagetoleranz. Hinweise auf eine geeignete Ausbildung von Reflektorelementen sind dieser Druckschrift nicht zu entnehmen.

Der vorliegenden Erfindung liegt daher das Problem zugrunde, eine Positionsmesseinrichtung zu schaffen, bei der ein möglichst kompakter Aufbau der Abtasteinheit gewährleistet ist.

Dieses Problem wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen in den abhängigen Ansprüchen.

Erfindungsgemäß ist nunmehr vorgesehen, die Elemente in der Abtasteinheit derart anzuordnen, dass sich die auf die Maßverkörperung auftreffenden Strahlenbündel gebeugt in Richtung der Abtasteinheit ausbreiten, wo diese erste Gitterstrukturen durchtreten. Anschließend treffen die Teilstrahlenbündel auf das Reflektorelement auf, von dem eine Rückreflexion in Richtung Maßverkörperung erfolgt, bevor die Teilstrahlenbündel dann zweite Gitterstrukturen durchtreten und erneut auf die Maßverkörperung auftreffen. Die Gitterstrukturen sind hierbei derart ausgebildet, dass beim ersten und beim zweiten Durchgang der Teilstrahlenbündel eine definierte Linsenwirkung auf die Teilstrahlenbündel resultiert.

Anstelle komplexer und voluminös bauender Retroreflektorelemente auf Prismenbasis kommt nunmehr in der Abtasteinheit erfindungsgemäß eine Baueinheit zum Einsatz, bestehend aus ein oder mehreren einfachen Reflektorelementen und ersten und zweiten Gitterstrukturen mit bestimmten optischen Linsenwirkungen. Die Gitterstrukturen übernehmen hierbei eine Retroreflektor-Funktionalität als auch eine Abtastgitter-Funktionalität. Es lässt sich dergestalt ein planarer Aufbau dieser Baueinheit realisieren, der wiederum eine einfache und kostengünstige Montage derselben ermöglicht.

Die Gitterstrukturen und das mindestens eine Reflektorelement können hierbei auf unterschiedlichen Elementen wie etwa eine Reflektorplatte und einer Abtastplatte angeordnet werden. Ebenso ist aber auch ein kompakter monolithischer Aufbau möglich, bei dem die Gitterstrukturen und das mindestens eine Reflektorelement auf einem einzigen Trägersubstrat angeordnet werden.

Vorzugsweise resultiert beim Durchgang durch die ersten Gitterstrukturen als Linsenwirkung eine antiparallel zur Einfallsrichtung orientierte Ablenkwirkung in Messrichtung sowie eine fokussierende Wirkung senkrecht zur Messrichtung zum Reflektorelement hin. Beim Durchgang durch die zweiten Gitterstrukturen resultiert als Linsenwirkung eine Ablenkwirkung in Messrichtung sowie mindestens eine kollimierende Wirkung senkrecht zur Messrichtung.

Bevorzugt sind die ersten und zweiten Gitterstrukturen ferner dergestalt ausgebildet, dass durch die resultierenden Ablenkwirkungen beim ersten und zweiten Durchgang ein Strahlversatz zwischen den Auftreffpunkten der Teilstrahlenbündel auf den ersten und zweiten Gitterstrukturen resultiert.

In einer möglichen Ausführungsform sind die ersten und zweiten Gitterstrukturen als Phasengitter ausgebildet, die die 0. Beugungsordnung unterdrücken.

Besonders vorteilhaft sind die ersten und zweiten Gitterstrukturen als geblazte Phasengitter mit hoher Effizienz in der +1. Beugungsordnung oder - 1. Beugungsordnung ausgebildet.

Hierbei können die ersten und zweiten Gitterstrukturen etwa gekrümmte Gitterlinien aufweisen, die in Messrichtung äquidistant angeordnet sind.

In einer möglichen Ausführungsform ist das mindestens eine Reflektorelement als Planspiegelreflektor ausgebildet.

Der Planspiegelreflektor ist bevorzugterweise in der Abtasteinheit parallel zur Maßverkörperung angeordnet.

In einer vorteilhaften Ausführungsform umfasst die Abtasteinheit ein transparentes Trägersubstrat, auf dessen der Maßverkörperung zugewandten Seite die ersten und zweiten Gitterstrukturen angeordnet sind. Der mindestens eine Planspiegelreflektor ist entweder auf der hierzu entgegengesetzten Seite des Trägersubstrats angeordnet, wobei die reflektierende Seite des Planspiegelreflektors in Richtung Maßverkörperung orientiert ist. Alternativ ist der mindestens eine Planspiegelreflektor auf der gleichen Seite des Trägersubstrats angeordnet, wobei die reflektierende Seite des Planspiegelreflektors abgewandt zur Maßverkörperung orientiert ist.

Bevorzugt sind die ersten und zweiten Gitterstrukturen derart ausgebildet, dass ein erstmalig auf die Maßverkörperung auftreffendes kollimiertes Teilstrahlenbündel nach dem zweiten Auftreffen auf die Maßverkörperung sich kollimiert in Richtung Abtasteinheit ausbreitet.

Die verschiedenen Gitterstrukturen besitzen vorzugsweise Brennweiten, die dem optischen Abstand zwischen den Gitterstrukturen und dem Reflektorelement entsprechen.

In einer möglichen Ausführungsform der erfindungsgemäßen Positionsmesseinrichtung ist die Abtasteinheit dergestalt ausgebildet, dass die von einer Lichtquelle emittierten Strahlenbündel ein erstes Mal auf die Maßverkörperung auftreffen, die als Auflicht-Beugungsgitter ausgebildet ist, wo eine Aufspaltung in zwei zur Abtasteinheit rückreflektierte Teilstrahlenbündel erfolgt, die zwei unterschiedlichen Beugungsordnungen entsprechen. Die beiden rückreflektierten Teilstrahlenbündel durchtreten in der Abtasteinheit zwei erste Gitterstrukturen in Richtung von zwei Reflektorelementen und erfahren hierbei eine antiparallel zur Einfallsrichtung orientierte Ablenkwirkung sowie nur eine fokussierende Wirkung senkrecht zur Messrichtung. Die derart abgelenkten und fokussierten Teilstrahlenbündel treffen dann auf die Reflektorelemente und erfahren eine Rückreflexion in Richtung der Maßverkörperung. Die beiden rückreflektierten Teilstrahlenbündel durchtreten dann zwei zweite Gitterstrukturen in Richtung der Maßverkörperung und erfahren hierbei eine Ablenkwirkung in Messrichtung sowie nur eine kollimierende Wirkung senkrecht zur Messrichtung. Die beiden Teilstrahlenbündel treffen dann wieder auf die Maßverkörperung, wo eine erneute Beugung und Rückreflexion von Teilstrahlenbündeln in Richtung der Abtasteinheit resultiert.

In einer alternativen Ausführungsform der erfindungsgemäßen Positionsmesseinrichtung ist die Abtasteinheit dergestalt ausgebildet, dass die von einer Lichtquelle emittierten Strahlenbündel ein erstes Mal auf die Maßverkörperung auftreffen, die als Auflicht-Beugungsgitter ausgebildet ist, wo eine Aufspaltung in zwei zur Abtasteinheit rückreflektierte Teilstrahlenbündel erfolgt, die zwei unterschiedlichen Beugungsordnungen entsprechen. Die beiden rückreflektierten Teilstrahlenbündel durchtreten in der Abtasteinheit zwei erste Gitterstrukturen in Richtung von zwei Reflektorelementen und erfahren hierbei eine antiparallel zur Einfallsrichtung orientierte Ablenkwirkung sowie eine fokussierende Wirkung sowohl in Messrichtung als auch senkrecht zur Messrichtung. Die derart abgelenkten und fokussierten Teilstrahlenbündel treffen dann auf die Reflektorelemente und erfahren eine Rückreflexion in Richtung der Maßverkörperung. Die beiden rückreflektierten Teilstrahlenbündel durchtreten dann zwei zweite Gitterstrukturen in Richtung der Maßverkörperung und erfahren hierbei eine Ablenkwirkung in Messrichtung sowie eine kollimierende Wirkung in Messrichtung als auch senkrecht zur Messrichtung. Die beiden Teilstrahlenbündel treffen dann wieder auf die Maßverkörperung, wo eine erneute Beugung und Rückreflexion von Teilstrahlenbündeln in Richtung der Abtasteinheit resultiert.

Mögliche Varianten der erfindungsgemäßen Positionsmesseinrichtung sehen vor, dass nach der zweiten Rückreflexion von der Maßverkörperung senkrecht in Richtung Abtasteinheit zurückreflektierte Teilstrahlenbündel überlagert auf ein Aufspaltgitter auftreffen, wo eine Aufspaltung in mehrere Raumrichtungen erfolgt und die in den verschiedenen Raumrichtungen aufgespaltenen Teilstrahlenbündel auf mehrere Detektoren einer optoelektronischen Detektoranordnung auftreffen. Dort resultiert im Fall der Relativbewegung von Abtasteinheit und Maßverkörperung jeweils ein verschiebungsabhängig moduliertes Abtastsignal.

In derartigen Varianten kann vorgesehen werden, dass entweder zwischen den Reflektorelementen und den zweiten Gitterstrukturen oder zwischen den zweiten Gitterstrukturen und der Maßverkörperung polarisationsoptische Elemente im Strahlengang angeordnet sind, die die Teilstrahlenbündel nach der Rückreflexion am Reflektorelement durchlaufen und die linear polarisierte Teilstrahlenbündel in zirkular polarisierte Teilstrahlenbündel transformieren.

Alternativ kann zur Erzeugung phasenverschobener Abtastsignale vorgesehen werden, dass entweder die mittleren Gitterkonstanten der beiden ersten und der beiden zweiten Gitterstrukturen geringfügig verschieden von der Gitterkonstante der Maßverkörperung gewählt sind oder die Gitterstriche der beiden ersten und der beiden zweiten Gitterstrukturen unter einem von 0° abweichenden Winkel zu den Gitterstrichen der Maßverkörperung angeordnet sind.

Ferner kann im Strahlengang der erfindungsgemäßen Positionsmesseinrichtung ein optisch-wirksamer Fensterbereich vorgesehen werden, den die von der Lichtquelle emittierten Strahlenbündel vor dem ersten Auftreffen auf die Maßverkörperung durchtreten, wobei im optisch-wirksamen Fensterbereich ein Ablenkgitter angeordnet ist, dessen Gitterstriche sich parallel zur Messrichtung erstrecken.

Weitere Einzelheiten und Vorteile der vorliegenden Erfindung seien anhand der nachfolgenden Beschreibung von Ausführungsbeispielen in Verbindung mit den Figuren erläutert.

### Es zeigen:

- Figur 1: einen ersten Teil des Abtaststrahlenganges einer ersten Ausführungsform der erfindungsgemäßen Positionsmesseinrichtung;
- Figur 2: einen zweiten Teil des Abtaststrahlenganges der ersten Ausführungsform der erfindungsgemäßen Positionsmesseinrichtung;
- Figur 3: eine andere Ansicht des Abtaststrahlenganges der ersten Ausführungsform der erfindungsgemäßen Positionsmesseinrichtung;
- Figur 4: eine Draufsicht auf die Abtastplatte der ersten Ausführungsform der erfindungsgemäßen Positionsmesseinrichtung;
- Figur 5: eine Draufsicht auf die Reflektorplatte der ersten Ausführungsform der erfindungsgemäßen Positionsmesseinrichtung;
- Figur 6a und 6b: jeweils eine alternative Variante zur Ausbildung des Reflektorelements und der Gitterstrukturen in der Abtasteinheit des ersten Ausführungsbeispiels;
- Figur 7: eine Darstellung des Abtaststrahlenganges einer weiteren Variante der ersten Ausführungsform der erfindungsgemäßen Positionsmesseinrichtung;
- Figur 8: eine Draufsicht auf die Abtastplatte der Positionsmesseinrichtung aus Figur 7;
- Figur 9: eine Draufsicht auf die Reflektorplatte Positionsmesseinrichtung aus Figur 7;
- Figur 10: einen ersten Teil des Abtaststrahlenganges einer zweiten Ausführungsform der erfindungsgemäßen Positionsmesseinrichtung;
- Figur 11: einen zweiten Teil des Abtaststrahlenganges der zweiten Ausführungsform der erfindungsgemäßen Positionsmesseinrichtung;
- Figur 12: eine andere Ansicht des Abtaststrahlenganges der zweiten Ausführungsform der erfindungsgemäßen Positionsmesseinrichtung;

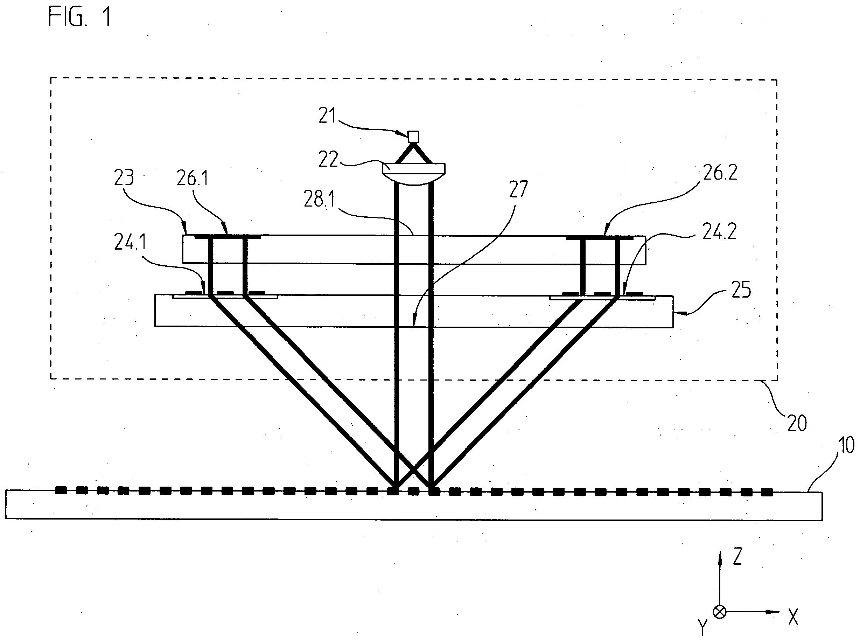

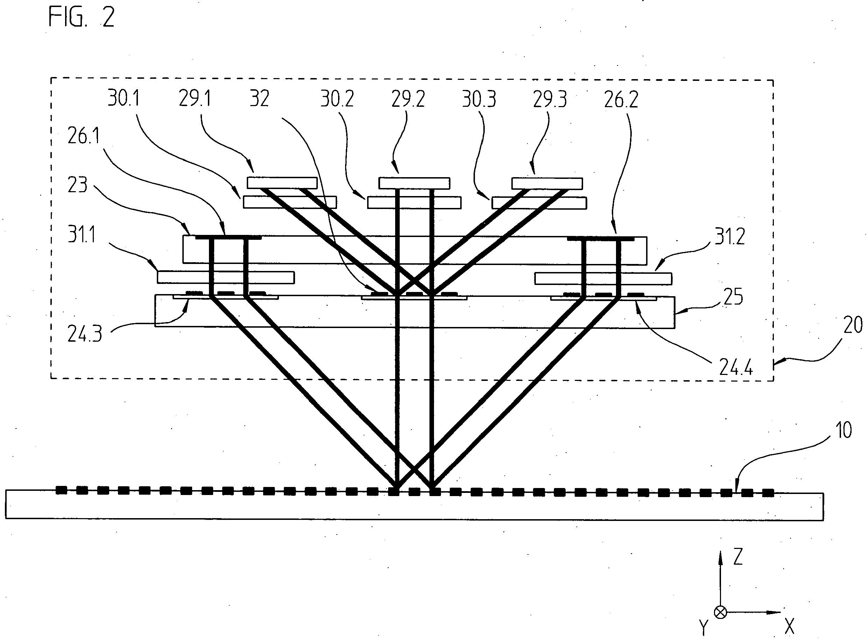

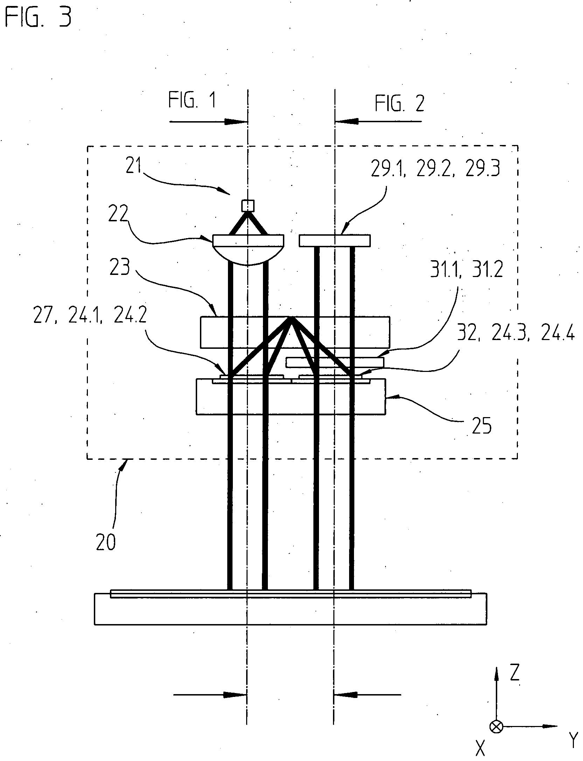

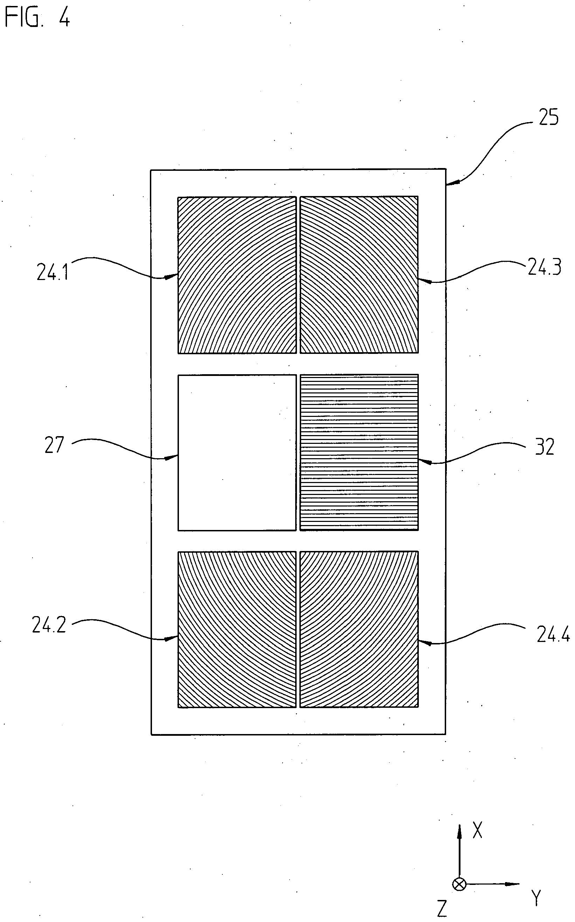

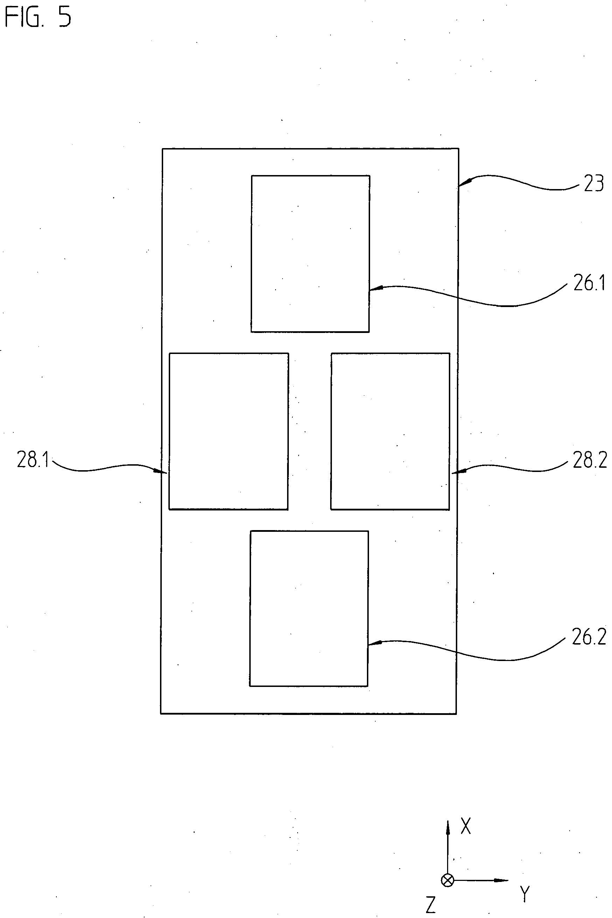

Anhand der Figuren 1-5 sei nachfolgend eine erste Ausführungsform der erfindungsgemäßen Positionsmesseinrichtung, ausgebildet als Auflicht-System, erläutert. Die Figuren 1 und 2 zeigen hierbei jeweils in schematisierter Form Teil-Abtaststrahlengänge in einer seitlichen Ansicht in der x-z-Ebene, während Figur 3 eine Ansicht des Abtaststrahlengangs in der y-z-Ebene zeigt. In Figur 1 ist der Abtaststrahlengang von der Lichtquelle 21 bis zu den Reflektorelementen 26.1 bzw. 26.2 dargestellt, Figur 2 veranschaulicht den Abtaststrahlengang von den Reflektorelementen 26.1 bzw. 26.2 bis zu den Detektorelementen 29.1, 29.2, 29.3 der optoelektronischen Detektoranordnung. Die Figuren 4 und 5 zeigen jeweils Draufsichten auf die Abtastplatte 25 bzw. die Reflektorplatte 23 mit den dort vorgesehenen optischen Elementen.

Die erfindungsgemäße Positionsmesseinrichtung umfasst eine Maßverkörperung 10 sowie eine relativ hierzu in mindestens einer Messrichtung x bewegliche Abtasteinheit 20. Mit der Maßverkörperung 10 und der Abtasteinheit 20 sind in bekannter Art und Weise die Objekte gekoppelt, deren Relativposition mit Hilfe der Positionsmesseinrichtung zu bestimmen ist. Hierbei kann es sich etwa um Maschinenteile handeln deren Relativposition präzise erfasst werden muss; die mittels der Positionsmesseinrichtung erzeugten Abtastsignale bzw. Positionsdaten werden von einer - nicht dargestellten - Folgeelektronik oder Auswerteeinheit beispielsweise zur Steuerung der Maschine weiterverarbeitet.

Im vorliegenden Ausführungsbeispiel ist eine Positionsmesseinrichtung zur Erfassung von Linearbewegungen mit einer sich linear erstreckenden Maßverkörperung dargestellt; selbstverständlich können auch rotatorische Positionsmesseinrichtungen auf Basis der erfindungsgemäßen Überlegungen realisiert werden.

Im Folgenden sei der grundsätzliche Abtaststrahlengang der ersten Ausführungsform der erfindungsgemäßen Positionsmesseinrichtung anhand der Figuren 1-5 beschrieben.

Das von Lichtquelle 21, z.B. einer Laserdiode, emittierte, linear polarisierte Strahlenbündel wird im dargestellten Beispiel zunächst über ein Kollimatorlinse 22 kollimiert, d.h. in ein paralleles Strahlenbündel umgewandelt. Anschließend durchtritt dieses Strahlenbündel optisch-unwirksame Fensterbereiche 28.1, 27 einer Reflektorplatte 23 und einer Abtastplatte 25. Die Reflektorplatte 23 und die Abtastplatte 25 bestehen in diesem Beispiel aus einem plattenförmigen, transparenten Trägersubstrat, beispielsweise aus Glas, auf dem eine Reihe optischer Elemente, wie die Reflektorelemente 26.1, 26.2 und die Gitterstrukturen 24.1 - 24.4, 32 angeordnet sind. Die konkrete Funktion der verschiedenen optischen Elemente im Abtaststrahlengang wird nachfolgend noch im Detail erläutert.

Das kollimierte Strahlenbündel trifft anschließend ein erstes Mal auf die Maßverkörperung 10, die in diesem Beispiel als linearer Auflichtmaßstab ausgebildet ist. Die Maßverkörperung 10 umfasst eine sich in Messrichtung x erstreckende, periodische Anordnung von Teilungsbereichen mit unterschiedlichen optischen Eigenschaften. Im vorliegenden Ausführungsbeispiel handelt es sich bei der Maßverkörperung 10 um ein Reflexions-Beugungsgitter, dessen Gitterstriche sich in der Maßverkörperungsebene in der angegebenen y-Richtung erstrecken; nachfolgend sei hierbei u.a. auch von der sog. Strichrichtung y die Rede.

Beim Auftreffen des einfallenden Strahlenbündels auf der Maßverkörperung 10 erfolgt eine Aufspaltung in zwei Teilstrahlenbündel, die als +/- 1. Beugungsordnung in Richtung der Abtasteinheit 20 zurückreflektiert werden. In der Abtasteinheit 20 durchtreten die Teilstrahlenbündel dann jeweils erste Gitterstrukturen 24.1, 24.2, die dort auf der Abtastplatte 25 angeordnet sind. Die ersten Gitterstrukturen 24.1, 24.2 üben erfindungsgemäß eine definierte optisch Linsenwirkung auf die durchtretenden Teilstrahlenbündel aus. Hierbei handelt es sich zum einen um eine definierte Ablenkwirkung auf die Teilstrahlenbündel, wobei diese antiparallel zur Einfallsrichtung in Messrichtung x abgelenkt werden. Zum anderen handelt es sich um eine fokussierende Wirkung auf die Teilstrahlenbündel senkrecht zur Messrichtung, also in y-Richtung bzw. in Strichrichtung der Maßverkörperung 10, zum jeweils nachgeordneten Reflektorelement 26.1, 26.2 hin. In der Darstellung der Figur 3 wird insbesondere die letztgenannte fokussierende Wirkung in Strichrichtung y deutlich; in Figur 1 ist die erstgenannte Ablenkwirkung bzgl. der Hauptausbreitungsrichtung der beiden Teilstrahlenbündel ersichtlich.

Um eine derartige Linsenwirkung der ersten Gitterstrukturen 24.1, 24.2 zu erzielen, sind die ersten Gitterstrukturen 24.1, 24.2 als sog. Offaxis-Zylinderlinsen auf der Abtastplatte 25 ausgebildet. Deren Brennweiten entsprechen dem optischen Abstand zur Reflektorplatte 23. Eine derartige Ausbildung der optischen Eigenschaften der ersten Gitterstrukturen 24.1, 24.2 bewirkt, dass die Hauptstrahlen der fokussierten Teilstrahlenbündel in Strichrichtung y unter einem definierten Winkel auf die Reflektorplatte 23 treffen und dadurch eine räumliche Trennung der auf die Reflektorplatte 23 ein- und ausfallenden Teilstrahlenbündel resultiert; hierzu sei etwa auf die Figur 3 verwiesen.

Eine Draufsicht auf die Abtastplatte 25 mit den darauf angeordneten ersten Gitterstrukturen 24.1, 24.2 ist in Figur 4 dargestellt. Ersichtlich ist hierbei, dass diese Gitterstrukturen 24.1, 24.2 jeweils gekrümmte Gitterlinien aufweisen, die in Messrichtung x äquidistant angeordnet sind. Vorzugsweise sind die ersten Gitterstrukturen 24.1, 24.2 als Phasengitter ausgebildet, die die 0. Beugungsordnung unterdrücken; besonders vorteilhaft sind hierbei sog. geblazte Phasengitter, die eine hohe Effizienz in der +1. Beugungsordnung oder in der -1. Beugungsordnung besitzen.

Die derart abgelenkten und fokussierten Teilstrahlenbündel gelangen anschließend auf die Reflektorelemente 26.1, 26.2, die im vorliegenden Beispiel auf der Oberseite der Reflektorplatte 23 angeordnet und als Planspiegelreflektoren ausgebildet sind.

Von den Reflektorelementen 26.1, 26.2 erfolgt eine Rückreflexion der Teilstrahlenbündel in Richtung der Maßverkörperung 10. Bevor die Teilstrahlenbündel ein zweites Mal auf die Maßverkörperung 10 auftreffen, durchtreten diese in der Abtasteinheit 20 im dargestellten Beispiel zunächst noch jeweils ein polarisationsoptisches Element 31.1, 31.2 in Form einer λ/4-Platte sowie anschließend zweite Gitterstrukturen 24.3, 24.4, die ebenfalls auf der Ab-tastplatte 25 angeordnet sind. Hierzu sei wiederum auf die Darstellung in Figur 3 verwiesen.

Über die polarisationsoptischen Elemente 31.1, 31.2 werden aus den linearpolarisierten Teilstrahlenbündeln jeweils entgegengesetzt zirkularpolarisierte Teilstrahlenbündel erzeugt. Die zweiten Gitterstrukturen 24.3, 24.4 besitzen ebenfalls eine definierte Linsenwirkung für die durchtretenden Teilstrahlenbündel. So erfahren die zirkularpolarisierten Teilstrahlenbündel hierbei eine Ablenkwirkung in Messrichtung x sowie zumindest eine kollimierende Wirkung senkrecht zur Messrichtung x, d.h. in Strichrichtung y. Vorzugsweise sind die zweiten Gitterstrukturen 24.3, 24.4 dieses Beispiels als sog. Offaxis-Linsen ausgebildet; im übrigen sei bzgl. der Ausbildung derselben auf die vorherigen Ausführungen zu den ersten Gitterstrukturen 24.1, 24.2 verwiesen.

Aufgrund der erläuterten resultierenden Ablenkwirkungen beim ersten und zweiten Durchgang durch die Gitterstrukturen 24.1 - 24.4 resultiert ein Strahlversatz zwischen den ersten und den zweiten Auftreffpunkten der Teilstrahlenbündel auf den ersten und zweiten Gitterstrukturen 24.1 - 24.4.

Die durch die zweiten Gitterstrukturen 24.3, 24.4 derart abgelenkten und zumindest in y-Richtung (teil-)kollimierten Teilstrahlenbündel gelangen anschließend ein zweites Mal auf die Maßverkörperung 10, wo eine erneute Beugung und Rückreflexion der Teilstrahlenbündel in Form der +/- 1. Beugungsordnungen in Richtung der Abtasteinheit 20 resultiert. Nach der Reflexion an der Maßverkörperung 10 treffen die senkrecht in Richtung Abtasteinheit 20 zurückreflektierten Teilstrahlenbündel als überlagertes, nunmehr wieder linearpolarisiertes Strahlenbündel auf ein Aufspaltgitter 32, das auf der Abtastplatte 25 angeordnet ist. Die Polarisationsrichtung des auf das Aufspaltgitter 32 auftreffenden Strahlenbündels hängt von der Relativposition der Maßverkörperung 10 zur Abtasteinheit 20 ab. Wird etwa die Maßverkörperung 10 um ein Viertel seiner Gitterkonstanten in Messrichtung x verschoben, so ergibt sich aufgrund der erfolgenden zweimaligen Beugung an der Maßverkörperung 10 in die +/- 1. Beugungsordnungen eine Phasenverschiebung von 360° zwischen den zur überlagerung gebrachten Teilstrahlenbündeln. Die Polarisationsrichtung des resultierenden linear polarisierten Strahlenbündels verändert sich um 180°, was im resultierenden Abtastsignal einer Signalperiode entspricht.

Das Aufspaltgitter 32 des vorliegenden Beispiels besitzt eine in Messrichtung x periodische Teilungsstruktur, deren Teilungsstriche sich in y-Richtung erstrecken. Am Aufspaltgitter 32 resultiert wie dargestellt eine Aufspaltung des einfallenden Strahlenbündels in drei verschiedene Raumrichtungen. In den verschiedenen Raumrichtungen sind jeweils Detektorelemente 29.1 - 29.3 einer optoelektronischen Detektoranordnung platziert, auf die die aufgespaltenen Strahlenbündel nach dem Durchtreten optisch unwirksamer Fensterbereiche 28.2 auf der Reflektorplatte 23 auftreffen. An den Detektorelementen 29.1 - 29.3 resultieren im Fall der Relativbewegung von Maßverkörperung 10 und Abtasteinheit 20 die verschiebungsabhängig modulierten Abtastsignale, die in bekannter Art und Weise weiterverarbeitbar sind. Vor den Detektorelementen 29.1 - 29.3 ist jeweils ein weiteres polarisationsoptisches Element 30.1 - 30.3 in Form eines Polarisators angeordnet, um auf diese Art und Weise drei um +/- 120° phasenverschobene Abtastsignale zu erzeugen.

Als maßgeblicher Vorteil der erläuterten Positionsmesseinrichtung ist anzuführen, dass anstelle komplexer Prismen zur Realisierung der Umlenkfunktionalität als auch der Abtastgitterfunktionalität im Abtaststrahlengang in der Abtasteinheit nunmehr eine - vorzugsweise diffraktive - Gitterstruktur in Form der ersten und zweiten Gitterstrukturen in Verbindung mit einem einfachen Planspiegelreflektor zum Einsatz kommen kann.

Das beschriebene erste Ausführungsbeispiel lässt sich im Rahmen der vorliegenden Erfindung auch noch abwandeln bzw. ergänzen; nachfolgend seien einige Alternativen kurz erläutert.

So ist es auch möglich, die polarisationsoptischen Elemente 31.1, 31.2, die die Umwandlung der linearpolarisierten Teilsstrahlenbündel in entgegengesetzt zirkularpolarisierte Teilstrahlenbündel bewirken, nicht zwischen den Reflektorelementen 26.1, 26.2 und den zweiten Gitterstrukturen 24.3, 24.4 anzuordnen, sondern erst im nachfolgenden Strahlengang zwischen den zweiten Gitterstrukturen 24.3, 24.4 und der Maßverkörperung 10.

Ferner könnten die Reflektorelemente 26.1, 26.2 grundsätzlich auch auf der Unterseite der Reflektorplatte 23 angeordnet werden.

Anstelle der erläuterten polarisationsoptischen Variante zur Erzeugung der phasenverschobenen Abtastsignale könnte auch eine alternative Erzeugung derselben im Rahmen der vorliegenden Erfindung vorgesehen werden. Hierzu kommen bekannte, sog. Vernier- oder Moire-Abtastprinzipien in Betracht, bei denen dann die Gitterkonstanten der Maßverkörperung und der ersten und zweiten Gitterstrukturen geringfügig verschieden (Vernier-System) bzw. mit leicht differierender Winkelausrichtung (Moire-System) zu wählen sind. In der Detektionsebene resultiert dann ein periodisches Streifenmuster, das verschiebungsabhängig moduliert wird und auf bekannte Art und Weise abtastbar ist.

In einer derartigen Ausführungsform entfallen alle polarisationsoptischen Bauteile des erläuterten ersten Ausführungsbeispiels, d.h. die oben erwähnten λ/4-Platten 31.1, 31.2, die Polarisatoren 30.1, 30.2, 30.3 sowie das Aufspaltgitter 32. In der Detektionsebene wäre in einer derartigen Ausführungsform dann beispielsweise eine sog. strukturierte Detektoranordnung platziert, über die eine Abtastung des dort resultierenden Streifenmusters und eine Umwandlung desselben in phasenversetzte Abtastsignale erfolgt. Alternativ zu einer derartigen Detektionsvariante könnten in dieser Ausführungsform in bekannter Art und Weise auch optische Bauteile wie Zylinderlinsenarrays oder Gitterstrukturen in Verbindung mit flächigen Detektoren zur Abtastung des Streifenmusters eingesetzt werden.

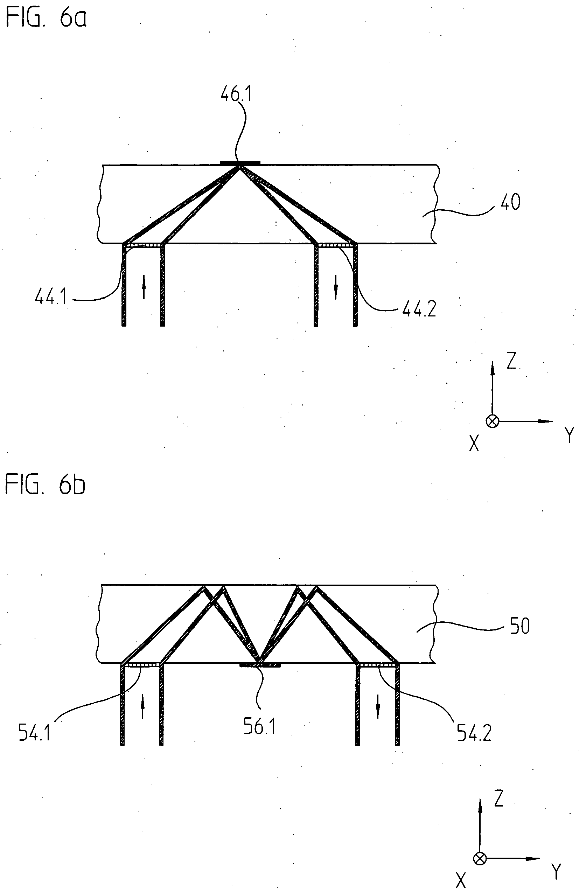

In einer weiteren abgewandelten Variante der ersten Ausführungsform der erfindungsgemäßen Positionsmesseinrichtung kann in der Abtasteinheit vorgesehen werden, anstelle der getrennten Abtast- und Reflektorplatte einen monolithischen Aufbau zu wählen, bei dem lediglich ein einziges transparentes Trägersubstrat vorgesehen wird, auf dem sowohl die verschiedenen Gitterstrukturen als auch die Reflektorelemente angeordnet sind. Entsprechende Ausführungsbeispiele sind in den Figuren 6a und 6b schematisiert dargestellt.

Im Beispiel der Figur 6a ist eine Teilansicht eines entsprechenden Bauelements in der y-z-Ebene im Abtaststrahlengang gezeigt, analog zur vorherigen Darstellung der Figur 3. Anstelle separater Elemente für Abtast- und Reflektorplatte ist nunmehr ein einziges transparentes Trägersubstrat 40 vorgesehen, auf dessen Unterseite bzw. der der - nicht dargestellten - Maßverkörperung zugewandten Seite die ersten und zweiten Gitterstrukturen 44.1, 44.2 angeordnet sind. Auf der entgegengesetzten Seite bzw. Oberseite des Trägersubstrates 40 ist das Reflektorelement 46.1 angeordnet, wiederum ausgebildet als einfacher Planspiegelreflektor.

Figur 6b zeigt eine ähnliche Variante eines monolithischen Aufbaus. Wiederum ist nur ein einziges transparentes Trägersubstrat 50 vorgesehen, bei dem die optisch relevanten Elemente in Form der ersten und zweiten Gitterstrukturen 54.1, 54.2 bzw. das Reflektorelement 56.1 nunmehr allesamt auf der Unterseite des Trägersubstrates angeordnet sind. Die erforderliche Umlenkung der Teilstrahlenbündel an der entgegengesetzten Oberseite des Trägesubstrates 50 kann beispielsweise über dort platzierte, weitere Reflektorelemente bzw. reflektierenden Schichten erfolgen.

Bei einem monolithischen Aufbau gemäß den Darstellungen in Figur 6a oder Figur 6b kann die Aufbringung von reflektierenden Schichten ganz entfallen, wenn die Strahlneigungen im Trägersubstrat 50 aufgrund der entsprechend feinen Gitterstrukturen 44.1, 44.2; 54.1, 54.2 groß genug sind, so dass derart Totalreflexion resultiert. Feinere Gitterstrukturen 44.1, 44.2, 54.1, 54.2 bieten hierbei grundsätzlich den Vorteil, dass weniger Beugungsordnungen entstehen und damit mehr Lichtleistung in der gewünschten Beugungsordnung verbleibt.

Ferner sei bzgl. alternativer Ausführungsformen erwähnt, dass die Lichtquelle nicht zwangsläufig wie im obigen Beispiel beschrieben in der Abtasteinheit integriert sein muss. So ist es etwa auch möglich, die Lichtquelle entfernt hiervon anzuordnen und die Beleuchtungs-Strahlenbündel der Abtasteinheit mittels Lichtleitern zuzuführen etc..

Das Gleiche gilt im Übrigen auch für die Detektorelemente der optoelektronischen Detektoranordnung, d.h. diese können ebenfalls räumlich getrennt von der eigentlichen Abtasteinheit angeordnet sein. Die zu detektierenden Teilstrahlenbündel werden dann den Detektorelementen beispielsweise über Lichtleiter zugeführt.

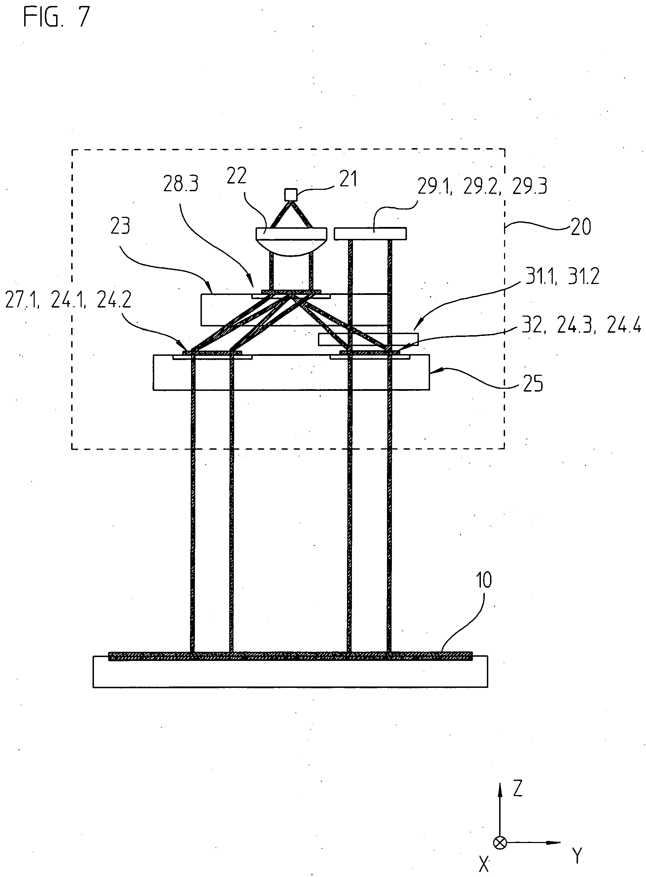

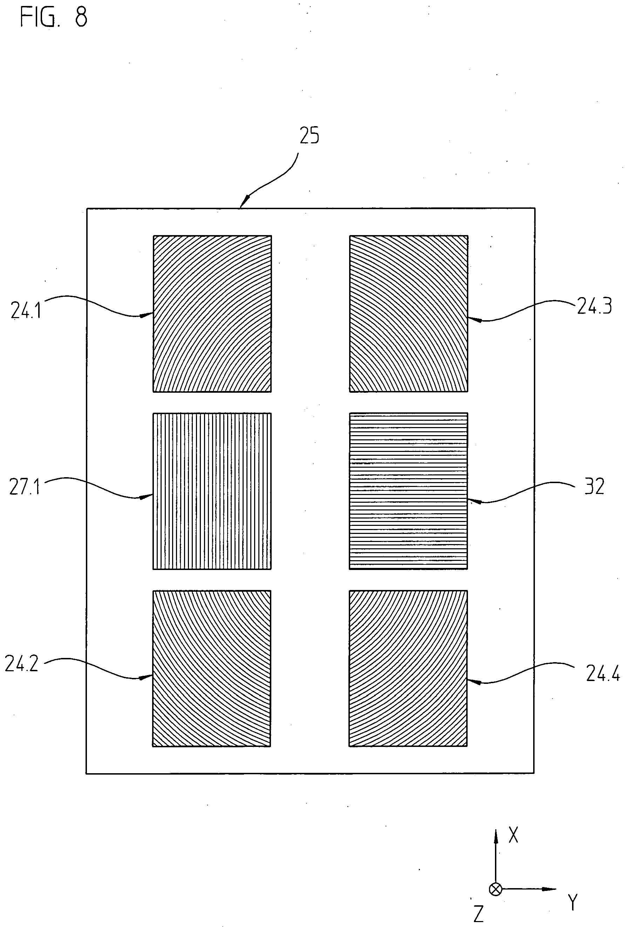

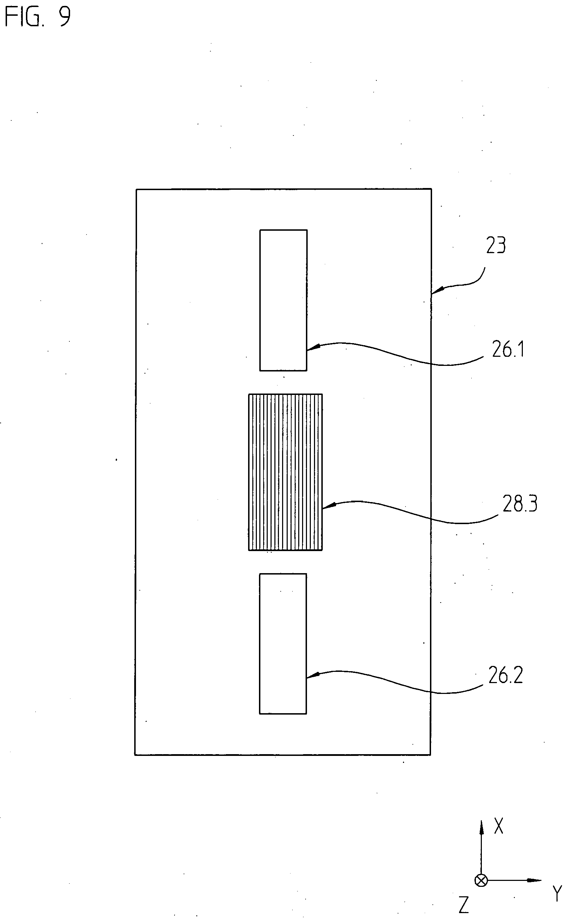

Eine weitere Variante des ersten Ausführungsbeispiels ist in den Figuren 7 - 9 schematisiert dargestellt. Funktional gleichwertige Elemente dieses Ausführungsbeispiels sind hierbei mit den identischen Bezugszeichen wie im oben erläuterten Beispiel bezeichnet. Nachfolgend seien nur die Unterschiede zum oben erläuterten Beispiel beschrieben, ansonsten sei auf die vorherigen Ausführungen verwiesen.

So ist in dieser Variante vorgesehen, in den beim vorherigen Beispiel im Strahlengang optisch-unwirksamen Fensterbereichen 27, 28.1, 28.2 der Abtast- und Reflektorplatte 25, 23 nunmehr jeweils Ablenkgitter 27.1, 28.3 anzuordnen. Die Ablenkgitter 27.1, 28.3 besitzen jeweils Teilungsstriche, die in y-Richtung periodisch angeordnet sind und sich in Messrichtung x erstrecken. Die Periodizitäten der beiden Ablenkgitter 27.1, 28.3 in den nunmehr optisch-wirksamen Fensterbereichen sind identisch gewählt.

Das Vorsehen von derartigen Ablenkgittern 27.1, 28.3 in den entsprechenden Fensterbereichen der Abtast- und Reflektorplatte 23, 25 im Strahlengang hat den Effekt, dass eventuelle Wellenlängenänderungen der Lichtquelle kompensiert werden können. Aufgrund der diffraktiv ausgebildeten ersten und zweiten Gitterstrukturen 24.1 - 24.4 könnten andernfalls eventuelle Wellenlängenänderungen eine unerwünschte Verschiebung des Strahlversatzes in y-Richtung bewirken, wenn die ersten und zweiten Auftreffpunkte in den ersten und zweiten Gitterstrukturen verschoben werden, was quasi eine Verschiebung des effektiven Messpunktes bedeuten würde. Die Anordnung der Ablenkgitter 27.1, 28.3 - wie nunmehr vorgesehen - hat zur Folge, dass eventuelle Wellenlängenänderungen sich gegenläufig auf die ersten und zweiten Auftreffpunkte auswirken und damit der effektive Strahlversatz bzw. der effektive Messpunkt unverändert bleibt.

Selbstverständlich lassen sich die verschiedenen, oben diskutierten alternativen Ausführungsformen auch in Verbindung mit dieser Variante realisieren.

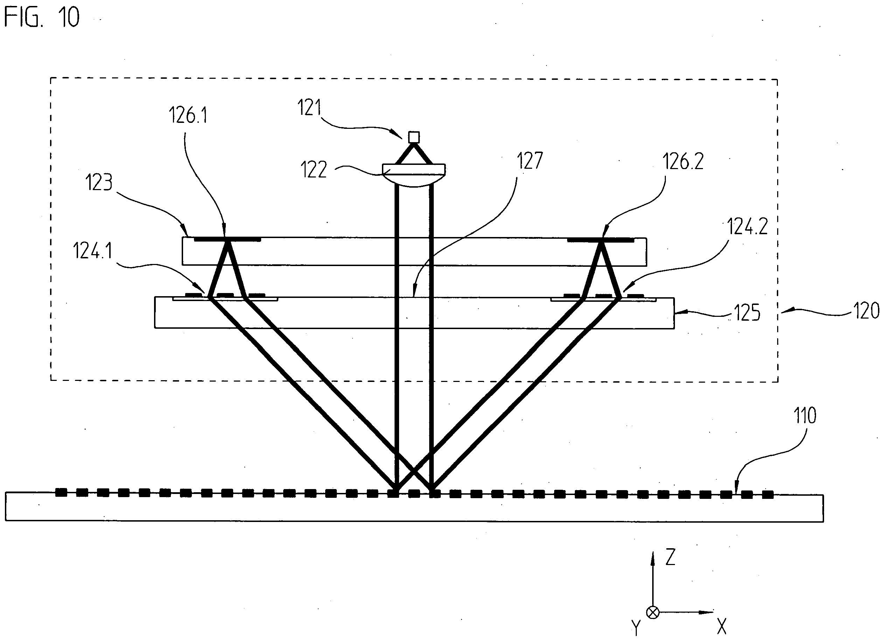

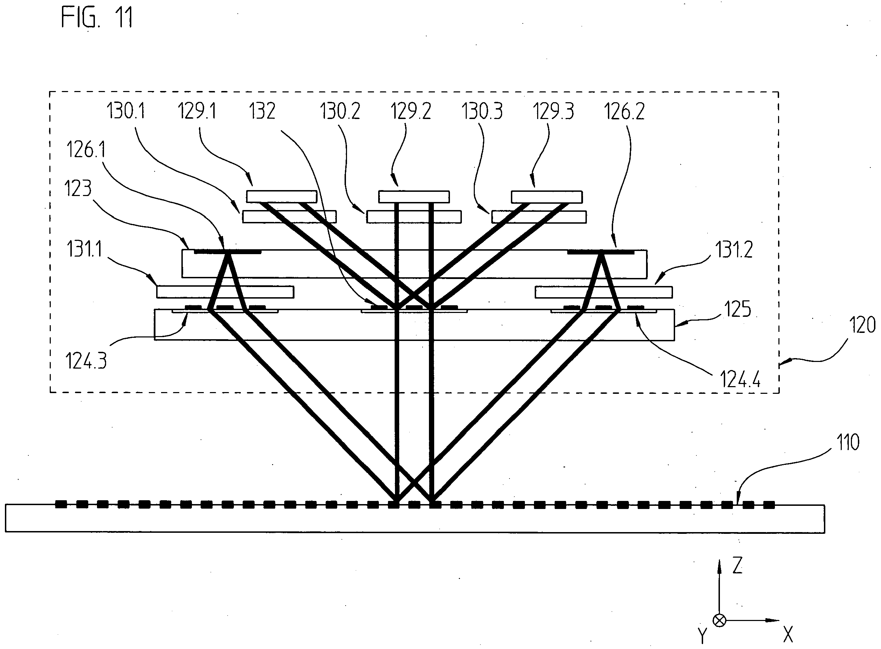

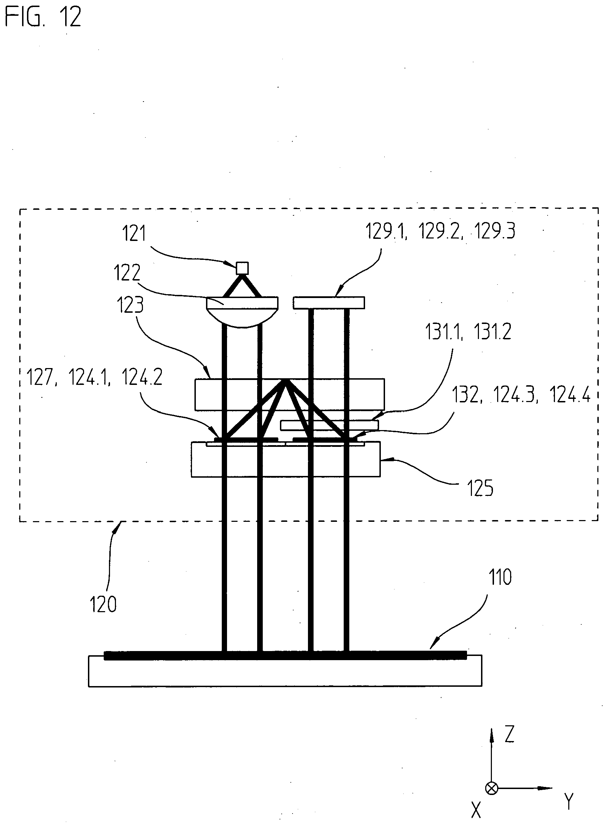

Eine zweite Ausführungsform der erfindungsgemäßen Positionsmesseinrichtung sei nachfolgend anhand der Figuren 10 - 12 beschrieben. Der grundsätzliche Aufbau dieser Ausführungsform der erfindungsgemäßen Positionsmesseinrichtung sowie der Verlauf des Abtaststrahlenganges ist im Wesentlichen identisch zum ersten erläuterten Beispiel. Nachfolgend seien deshalb erneut nur die maßgeblichen Unterschiede erläutert.

So besitzen die ersten Gitterstrukturen 124.1, 124.2 nunmehr als Linsenwirkung zusätzlich zur optischen Funktionalität gemäß dem ersten Beispiel aus den Figuren 1 - 5 eine zusätzliche Fokussierungswirkung auf die durchlaufenden Teilstrahlenbündel in Messrichtung x. Dies ist beispielsweise in der Darstellung der Figur 10 ersichtlich. Die ersten Gitterstrukturen sind hierzu als entsprechend dimensionierte Offaxis-Linsen ausgebildet, deren Brennweiten dem optischen Abstand zur Reflektorplatte 123 entsprechen. Eine derartige Auslegung der optischen Eigenschaften der ersten Gitterstrukturen 124.1, 124.2 bewirkt, dass der Hauptstrahl des fokussierten Teilstrahlenbündels in Messrichtung x senkrecht auf die Reflektorplatte 123 trifft, in Strichrichtung y hingegen unter einem definierten Winkel. Dieser Winkel wird derart gewählt, dass wiederum eine räumliche Trennung der auf die Reflektorplatte 123 einfallenden und austretenden Teilstrahlenbündel in y-Richtung resultiert. Beim nach der Reflexion an den Reflektorelementen 126.1, 126.2 erfolgenden Durchtreten der zweiten Gitterstrukturen 124.3, 124.4 erfahren die Teilstrahlenbündel wiederum eine optische Linsenwirkung wie bereits im obigen Beispiel erläutert, d.h. es erfolgt eine Absenkung antiparallel zur Einfallsrichtung sowie eine Kollimation derselben.

Die in diesem Ausführungsbeispiel als Offaxis-Linsen ausgebildeten ersten Gitterstrukturen 124.1, 124.2 fokussieren hierbei die jeweiligen Teilstrahlenbündel in beide laterale Richtungen x, y und entsprechen damit in ihrer optischen Linsenwirkung herkömmlichen zylindersymmetrischen Linsen. Im Unterschied hierzu besitzen die Offaxis-Zylinderlinsen des ersten Beispiels lediglich eine Linsenwirkung in Form einer Fokussierungswirkung in y-Richtung.

Wichtig für die korrekte Funktion dieser Ausführungsform der erfindungsgemäßen Positionsmesseinrichtung ist zudem, dass die Reflektorplatte 123 möglichst parallel zur Maßverkörperung angeordnet ist.

Über die zusätzliche optische Wirkung der ersten Gitterstrukturen resultiert in diesem Ausführungsbeispiel demzufolge eine optische Retroreflektorfunktionalität aus dem Zusammenwirken der Gitterstrukturen 124.1 - 124.4 und den Reflektorelementen 126.1, 126.2 im Abtaststrahlengang. Anstelle eine derartige Retroreflektorfunktionalität wie bisher mittels aufwändiger Tripelprismen etc. zu realisieren, lässt sich die gleiche optische Wirkung nunmehr durch deutlich einfacher aufgebaute diffraktive Elemente erzielen.

Ansonsten können auch bei diesem Ausführungsbeispiel alle bereits oben erläuterten Alternativ-Maßnahmen realisiert werden, d.h. auch für dieses Ausführungsbeispiel der erfindungsgemäßen Positionsmesseinrichtung stehen im Rahmen der vorliegenden Erfindung diverse Varianten zur Verfügung.

Abschließend sei erwähnt, dass alternativ zu den oben erläuterten Auflicht-Positionsmesseinrichtungen selbstverständlich auch Durchlicht-Positionsmesseinrichtungen erfindungsgemäß auszugestalten sind. So kann etwa die abtastseitige Anordnung aus ersten Gitterstrukturen, einer Reflektorplatte und zweiten Gitterstrukturen auch dazu verwendet werden, die von der Durchlicht-Maßverkörperung kommenden Teilstrahlenbündel nach deren ersten Durchlaufen derselben wieder zurück zur Durchlicht-Maßverkörperung umzulenken etc.. Die entsprechende Abtasteinheit muss dann in bekannter Art und Weise die Maßverkörperung im Umgriff umschließen.

## Patentansprüche

1. Positionsmesseinrichtung zur Erfassung der Relativposition einer Abtasteinheit sowie einer hierzu in mindestens einer Messrichtung beweglichen Maßverkörperung, wobei die Abtasteinheit mehrere Gitterstrukturen sowie mindestens ein Reflektorelement umfasst,
**dadurch gekennzeichnet,**
- **dass** die Elemente in der Abtasteinheit (20; 120) derart angeordnet sind, dass die von der Maßverkörperung (10; 110) gebeugten Strahlenbündel sich in Richtung der Abtasteinheit (20; 120) ausbreiten, wo diese erste Gitterstrukturen (24.1, 24.2; 124.1, 124.2) durchtreten, anschließend auf das Reflektorelement (26.1, 26.2; 126.1, 126.2) auftreffen, von dem eine Rückreflexion in Richtung Maßverkörperung (10; 110) erfolgt und die Teilstrahlenbündel dann zweite Gitterstrukturen (24.3, 24.4; 124.3, 124.4) durchtreten und anschließend erneut auf die Maßverkörperung (10; 110) auftreffen und
- wobei die ersten und zweiten Gitterstrukturen (24.1, 24.2, 24.3, 24.4; 124.1, 124.2; 124.3, 124.4) derart ausgebildet sind, dass beim jeweiligen Durchgang der Teilstrahlenbündel eine definierte Linsenwirkung auf die Teilstrahlenbündel resultiert und
- beim Durchgang durch die ersten Gitterstrukturen (24.1, 24.2; 124.1, 124.2) als Linsenwirkung eine fokussierende Wirkung senkrecht zur Messrichtung (x) zum Reflektorelement (26.1, 26.2; 126.1, 126.2) hin resultiert und
- beim Durchgang durch die zweiten Gitterstrukturen (24.3, 24.4; 124.3, 124.4) als Linsenwirkung mindestens eine kollimierende Wirkung senkrecht zur Messrichtung (x) resultiert.

2. Positionsmesseinrichtung nach Anspruch 1, **dadurch gekennzeichnet, dass** die ersten und zweiten Gitterstrukturen (24.1, 24.2, 24.3, 24.4; 124.1, 124.2; 124.3, 124.4) derart ausgebildet sind, dass
- beim Durchgang durch die ersten Gitterstrukturen (24.1, 24.2; 124.1, 124.2) als Linsenwirkung ferner eine antiparallel zur Einfallsrichtung orientierte Ablenkwirkung in Messrichtung (x) resultiert und
- beim Durchgang durch die zweiten Gitterstrukturen (24.3, 24.4; 124.3, 124.4) als Linsenwirkung ferner eine Ablenkwirkung in Messrichtung (x) resultiert.

3. Positionsmesseinrichtung nach Anspruch 2, **dadurch gekennzeichnet, dass** die ersten und zweiten Gitterstrukturen (24.1, 24.2, 24.3, 24.4; 124.1, 124.2; 124.3, 124.4) ferner dergestalt ausgebildet sind, dass durch die resultierenden Ablenkwirkungen beim ersten und zweiten Durchgang ein Strahlversatz zwischen den Auftreffpunkten der Teilstrahlenbündel auf den ersten und zweiten Gitterstrukturen (24.1, 24.2, 24.3, 24.4; 124.1, 124.2; 124.3, 124.4) resultiert.

4. Positionsmesseinrichtung nach mindestens einem der vorhergehenden Ansprüche, **dadurch gekennzeichnet, dass** die ersten und zweiten Gitterstrukturen (24.1, 24.2, 24.3, 24.4; 124.1, 124.2; 124.3, 124.4) als Phasengitter ausgebildet sind, die die 0. Beugungsordnung unterdrücken.

5. Positionsmesseinrichtung nach Anspruch 4, **dadurch gekennzeichnet, dass** die ersten und zweiten Gitterstrukturen (24.1, 24.2, 24.3, 24.4; 124.1, 124.2; 124.3, 124.4) als geblazte Phasengitter ausgebildet sind.

6. Positionsmesseinrichtung nach mindestens einem der vorhergehenden Ansprüche, **dadurch gekennzeichnet, dass** die ersten und zweiten Gitterstrukturen (24.1, 24.2, 24.3, 24.4; 124.1, 124.2; 124.3, 124.4) gekrümmte Gitterlinien aufweisen, die in Messrichtung (x) äquidistant angeordnet sind.

7. Positionsmesseinrichtung nach mindestens einem der vorhergehenden Ansprüche, **dadurch gekennzeichnet, dass** das mindestens eine Reflektorelement (26.1, 26,2; 126,1, 126.2) als Planspiegelreflektor ausgebildet ist.

8. Positionsmesseinrichtung nach Anspruch 7, **dadurch gekennzeichnet, dass** der Planspiegelreflektor in der Abtasteinheit (20; 120) parallel zur Maßverkörperung (10; 110) angeordnet ist.

9. Positionsmesseinrichtung nach Anspruch 7, **dadurch gekennzeichnet, dass** die Abtasteinheit ein transparentes Trägersubstrat (40; 50) umfasst, auf dessen der Maßverkörperung zugewandten Seite die ersten und zweiten Gitterstrukturen (44.1, 44.2; 54.1, 54.2) angeordnet sind und der Planspiegelreflektor (46.1, 56.1) entweder
- auf der hierzu entgegengesetzten Seite des Trägersubstrats (40) angeordnet ist, wobei die reflektierende Seite des Planspiegelreflektors (46.1) in Richtung Maßverkörperung orientiert ist oder
- auf der gleichen Seite des Trägersubstrats (50) angeordnet ist, wobei die reflektierende Seite des Planspiegelreflektors (56.1) abgewandt zur Maßverkörperung orientiert ist.

10. Positionsmesseinrichtung nach mindestens einem der vorhergehenden Ansprüche, **dadurch gekennzeichnet, dass** die ersten und zweiten Gitterstrukturen (24.1, 24.2, 24.3, 24.4; 124.1, 124.2; 124.3, 124.4) derart ausgebildet sind, dass ein erstmalig auf die Maßverkörperung (10; 110) auftreffendes kollimiertes Teilstrahlenbündel nach dem zweiten Auftreffen auf die Maßverkörperung (10; 110) sich kollimiert in Richtung Abtasteinheit (20; 120) ausbreitet.

11. Positionsmesseinrichtung nach mindestens einem der vorhergehenden Ansprüche, **dadurch gekennzeichnet, dass** die Gitterstrukturen (24.1, 24.2, 24.3, 24.4; 124.1, 124.2; 124.3, 124.4) Brennweiten besitzen, die dem optischen Abstand zwischen den Gitterstrukturen (24.1, 24.2, 24.3, 24.4; 124.1, 124.2; 124.3, 124.4) und dem Reflektorelement (26.1, 26.2; 126.1, 126.2) entsprechen.

12. Positionsmesseinrichtung nach mindestens einem der Ansprüche 2-11, **dadurch gekennzeichnet, dass** die Abtasteinheit (20) dergestalt ausgebildet ist, dass die von einer Lichtquelle (21) emittierten Strahlenbündel
- ein erstes Mal auf die Maßverkörperung (10) auftreffen, die als Auflicht-Beugungsgitter ausgebildet ist, wo eine Aufspaltung in zwei zur Abtasteinheit (20) rückreflektierte Teilstrahlenbündel erfolgt, die zwei unterschiedlichen Beugungsordnungen entsprechen,
- die beiden rückreflektierten Teilstrahlenbündel in der Abtasteinheit (20) zwei erste Gitterstrukturen (24.1, 24.2) in Richtung von zwei Reflektorelementen (26.1, 26.2) durchtreten und hierbei eine antiparallel zur Einfallsrichtung orientierte Ablenkwirkung sowie nur eine fokussierende Wirkung senkrecht zur Messrichtung (x) erfahren,
- die derart abgelenkten und fokussierten Teilstrahlenbündel dann auf die Reflektorelemente (26.1, 26.2) treffen und eine Rückreflexion in Richtung der Maßverkörperung (10) erfahren,
- die beiden rückreflektierten Teilstrahlenbündel dann zwei zweite Gitterstrukturen (24.3, 24.4) in Richtung der Maßverkörperung (10) durchtreten und hierbei eine Ablenkwirkung in Messrichtung (x) sowie nur eine kollimierende Wirkung senkrecht zur Messrichtung (x) erfahren,
- die beiden Teilstrahlenbündel dann wieder auf die Maßverkörperung (10) treffen, wo eine erneute Beugung und Rückreflexion von Teilstrahlenbündeln in Richtung der Abtasteinheit (20) resultiert.

13. Positionsmesseinrichtung nach mindestens einem der Ansprüche 2 - 11, **dadurch gekennzeichnet, dass** die Abtasteinheit (120) dergestalt ausgebildet ist, dass die von einer Lichtquelle (121) emittierten Strahlenbündel
- ein erstes Mal auf die Maßverkörperung (110) auftreffen, die als Auflicht-Beugungsgitter ausgebildet ist, wo eine Aufspaltung in zwei zur Abtasteinheit (120) rückreflektierte Teilstrahlenbündel erfolgt, die zwei unterschiedlichen Beugungsordnungen entsprechen,
- die beiden rückreflektierten Teilstrahlenbündel in der Abtasteinheit zwei erste Gitterstrukturen (124.1, 124.2) in Richtung von zwei Reflektorelementen (126.1, 126.2) durchtreten und hierbei eine antiparallel zur Einfallsrichtung orientierte Ablenkwirkung sowie eine fokussierende Wirkung sowohl in Messrichtung (x) als auch senkrecht zur Messrichtung (x) erfahren,
- die derart abgelenkten und fokussierten Teilstrahlenbündel dann auf die Reflektorelemente (126.1, 126.2) treffen und eine Rückreflexion in Richtung der Maßverkörperung (110) erfahren,
- die beiden rückreflektierten Teilstrahlenbündel dann zwei zweite Gitterstrukturen (124.3, 124.4) in Richtung der Maßverkörperung (110) durchtreten und hierbei eine Ablenkwirkung in Messrichtung sowie eine kollimierende Wirkung in Messrichtung (x) als auch senkrecht zur Messrichtung (x) erfahren,
- die beiden Teilstrahlenbündel dann wieder auf die Maßverkörperung (110) treffen, wo eine erneute Beugung und Rückreflexion von Teilstrahlenbündeln in Richtung der Abtasteinheit (120) resultiert.

14. Positionsmesseinrichtung nach Anspruch 12 oder 13, **dadurch gekennzeichnet, dass** nach der zweiten Rückreflexion von der Maßverkörperung (10; 110) senkrecht in Richtung Abtasteinheit (20; 120) zurückreflektierte Teilstrahlenbündel überlagert auf ein Aufspaltgitter (32; 132) auftreffen, wo eine Aufspaltung in mehrere Raumrichtungen erfolgt und die in den verschiedenen Raumrichtungen aufgespaltenen Teilstrahlenbündel auf mehrere Detektoren (29.1, 29.2, 29.3; 129.1, 129.2, 129.3) einer optolektronischen Detektoranordnung auftreffen, wo im Fall der Relativbewegung von Abtasteinheit (20; 120) und Maßverkörperung (10; 110) jeweils ein verschiebungsabhängig moduliertes Abtastsignal resultiert.

15. Positionsmesseinrichtung nach Anspruch 14, **dadurch gekennzeichnet, dass** entweder zwischen den Reflektorelementen (26.1, 26.2; 126.1, 126.2) und den zweiten Gitterstrukturen (24.3, 24.4; 124.3, 124.4) oder zwischen den zweiten Gitterstrukturen (24.3, 24.4; 124.3, 124.4) und der Maßverkörperung (10; 110) polarisationsoptische Elemente (31.1, 31.2; 131.1, 131.2) im Strahlengang angeordnet sind, die die Teilstrahlenbündel nach der Rückreflexion am Reflektorelement (26.1, 26.2; 126.1, 126.2) durchlaufen und die linear polarisierte Teilstrahlenbündel in zirkular polarisierte Teilstrahlenbündel transformieren.

16. Positionsmesseinrichtung nach Anspruch 12 oder 13, **dadurch gekennzeichnet, dass**
- entweder die mittleren Gitterkonstanten der beiden ersten und der beiden zweiten Gitterstrukturen (24.1, 24.2, 24.3, 24.4; 124.1, 124.2; 124.3, 124.4) geringfügig verschieden von der Gitterkonstante der Maßverkörperung (10; 110) gewählt sind oder
- die Gitterstriche der beiden ersten und der beiden zweiten Gitterstrukturen (24.1, 24.2, 24.3, 24.4; 124.1, 124.2; 124.3, 124.4) unter einem von 0° abweichenden Winkel zu den Gitterstrichen der Maßverkörperung (10; 110) angeordnet sind.

17. Positionsmesseinrichtung nach Anspruch 12 oder 13, **dadurch gekennzeichnet, dass** im Strahlengang ein optisch-wirksamer Fensterbereich (28.3) vorgesehen ist, den die von der Lichtquelle (21) emittierten Strahlenbündel vor dem ersten Auftreffen auf die Maßverkörperung (110) durchtreten, wobei im optisch-wirksamen Fensterbereich (28.3) ein Ablenkgitter angeordnet ist, dessen Gitterstriche sich parallel zur Messrichtung (x) erstrecken.

## Claims

1. Position measuring device for detecting the relative position of a scanning unit and of a material measure movable in at least one measurement direction with respect thereto, wherein the scanning unit comprises a plurality of grating structures and also at least one reflector element,
**charaaterized**
- in that the elements in the scanning unit (20; 120) are arranged in such a way that the beams diffracted by the material measure (10; 110) propagate in the direction of the scanning unit (20; 120), where said beams pass through first grating structures (24.1, 24.2; 124.1, 124.2) and subsequently impinge on the reflector element (26.1, 26.2; 126.1, 126.2), from which a back-reflection in the direction of the material measure (10; 110) is effected, and the partial beams then pass through second grating structures (24.3, 24.4; 124.3, 124.4) and subsequently impinge again on the material measure (10; 110), and
- wherein the first and second grating structures (24.1, 24.2, 24.3, 24.4; 124.1, 124.2; 124.3, 124.4) are embodied in such a way that a defined lens effect on the partial beams results upon the respective passage of the partial beams, and
- a focussing effect perpendicular to the measurement direction (x) towards the reflector element (26.1, 26.2; 126.1, 126.2) results as lens effect upon passage through the first grating structures (24.1, 24.2; 124.1, 124.2), and
- at least one collimating effect perpendicular to the measurement direction (x) results as lens effect upon passage through the second grating structures (24.3, 24.4; 124.3, 124.4).

2. Position measuring device according to Claim 1, **characterized in that** the first and second grating structures (24.1, 24.2, 24.3, 24.4; 124.1, 124.2; 124.3, 124.4) are embodied in such a way that
- furthermore a deflection effect oriented antiparallel to the direction of incidence in the measurement direction (x) results as lens effect upon passage through the first grating structures (24.1, 24.2; 124.1, 124.2), and
- furthermore a deflection effect in the measurement direction (x) results as lens effect upon passage through the second grating structures (24.3, 24.4; 124.3, 124.4).

3. Position measuring device according to Claim 2, **characterized in that** the first and second grating structures (24.1, 24.2, 24.3, 24.4; 124.1, 124.2; 124.3, 124.4) are furthermore embodied in such a way that the resulting deflection effects upon the first and second passage result in a beam offset between the impingement points of the partial beams on the first and second grating structures (24.1, 24.2, 24.3, 24.4; 124.1, 124.2; 124.3, 124.4).

4. Position measuring device according to at least one of the preceding claims, **characterized in that** the first and second grating structures (24.1, 24.2, 24.3, 24.4; 124.1, 124.2; 124.3, 124.4) are embodied as phase gratings that suppress the 0^{th} order of diffraction.

5. Position measuring device according to Claim 4, **characterized in that** the first and second grating structures (24.1, 24.2, 24.3, 24.4; 124.1, 124.2; 124.3, 124.4) are embodied as blazed phase gratings.

6. Position measuring device according to at least one of the preceding claims, **characterized in that** the first and second grating structures (24.1, 24.2, 24.3, 24.4; 124.1, 124.2; 124.3, 124.4) have curved grating lines arranged equidistantly in the measurement direction (x).

7. Position measuring device according to at least one of the preceding claims, **characterized in that** the at least one reflector element (26.1, 26.2; 126.1, 126.2) is embodied as a plane mirror reflector.

8. Position measuring device according to Claim 7, **characterized in that** the plane mirror reflector is arranged in the scanning unit (20; 120) parallel to the material measure (10; 110).

9. Position measuring device according to Claim 7, **characterized in that** the scanning unit comprises a transparent carrier substrate (40; 50), on whose side facing the material measure the first and second grating structures (44.1, 44.2; 54.1, 54.2) are arranged, and the plane mirror reflector (46.1, 56.1) either
- is arranged on the opposite side of the carrier substrate (40) relative thereto, wherein the reflective side of the plane mirror reflector (46.1) is oriented in the direction of the material measure, or
- is arranged on the same side of the carrier substrate (50), wherein the reflective side of the plane mirror reflector (56.1) is oriented in a manner facing away from the material measure.

10. Position measuring device according to at least one of the preceding claims, **characterized in that** the first and second grating structures (24.1, 24.2, 24.3, 24.4; 124.1, 124.2; 124.3, 124.4) are embodied in such a way that a collimated partial beam impinging on the material measure (10; 110) for the first time propagates in the direction of the scanning unit (20; 120) in a collimated fashion after the second impingement on the material measure (10; 110).

11. Position measuring device according to at least one of the preceding claims, **characterized in that** the grating structures (24.1, 24.2, 24.3, 24.4; 124.1, 124.2; 124.3, 124.4) have focal lengths with correspond to the optical distance between the grating structures (24.1, 24.2, 24.3, 24.4; 124.1, 124.2; 124.3, 124.4) and the reflector element (26.1, 26.2; 126.1, 126.2).

12. Position measuring device according to at least one of Claims 2 - 11, **characterized in that** the scanning unit (20) is embodied in such a way that the beams emitted by a light source (21)
- impinge a first time on the material measure (10), which is embodied as a reflected-light diffraction grating, where splitting into two partial beams that are reflected back to the scanning unit (20) is effected, said partial beams corresponding to two different orders of diffraction,
- the two partial beams reflected back, in the scanning unit (20), pass through two first grating structures (24.1, 24.2) in the direction of two reflector elements (26.1, 26.2) and in the process experience a deflection effect oriented antiparallel to the direction of incidence and only a focussing effect perpendicular to the measurement direction (x),
- the partial beams deflected and focussed in this way then impinge on the reflector elements (26.1, 26.2) and experience a back-reflection in the direction of the material measure (10),
- the two partial beams reflected back then pass through two second grating structures (24.3, 24.4) in the direction of the material measure (10) and in the process experience a deflection effect in the measurement direction (x) and only a collimating effect perpendicular to the measurement direction (x),
- the two partial beams then impinge again on the material measure (10), where a renewed diffraction and back-reflection of partial beams in the direction of the scanning unit (20) result.

13. Position measuring device according to at least one of Claims 2 - 11, **characterized in that** the scanning unit (120) is embodied in such a way that the beams emitted by a light source (121)
- impinge a first time on the material measure (110), which is embodied as a reflected-light diffraction grating, where splitting into two partial beams that are reflected back to the scanning unit (120) is effected, said partial beams corresponding to two different orders of diffraction,
- the two partial beams reflected back, in the scanning unit (120), pass through two first grating structures (124.1, 124.2) in the direction of two reflector elements (126.1, 126.2) and in the process experience a deflection effect oriented antiparallel to the direction of incidence and a focussing effect both in the measurement direction (x) and perpendicular to the measurement direction (x),
- the partial beams deflected and focussed in this way then impinge on the reflector elements (126.1, 126.2) and experience a back-reflection in the direction of the material measure (110),
- the two partial beams reflected back then pass through two second grating structures (124.3, 124.4) in the direction of the material measure (110) and in the process experience a deflection effect in the measurement direction (x) and a collimating effect in the measurement direction (x) and perpendicular to the measurement direction (x),
- the two partial beams then impinge again on the material measure (110), where a renewed diffraction and back-reflection of partial beams in the direction of the scanning unit (120) result.

14. Position measuring device according to Claim 12 or 13, **characterized in that** partial beams reflected back after the second back-reflection from the material measure (10; 110) perpendicular in the direction of the scanning unit (20; 120) impinge in a superimposed manner on a splitting grating (32; 132), where splitting in a plurality of spatial directions is effected and the partial beams split in the different spatial directions impinge on a plurality of detectors (29.1, 29.2, 29.3; 129.1, 129.2, 129.3) of an optoelectronic detector arrangement, where in the case of the relative movement of scanning unit (20; 120) and material measure (10; 110) a scanning signal modulated in a displacement-dependent manner respectively results.

15. Position measuring device according to Claim 14, **characterized in that** either between the reflector elements (26.1, 26.2; 126.1, 126.2) and the second grating structures (24.3, 24.4; 124.3, 124.4) or between the second grating structures (24.3, 24.4; 124.3, 124.4) and the material measure (10; 110) polarisation-optical elements (31.1, 31.2; 131.1, 131.2) are arranged in the beam path, which the partial beams pass through after the back-reflection at the reflector element (26.1, 26.2; 126.1, 126.2) and which transform linearly polarized partial beams into circularly polarized partial beams.

16. Position measuring device according to Claim 12 or 13, **characterized in that**
- either the average grating constants of the two first and the two second grating structures (24.1, 24.2, 24.3, 24.4; 124.1, 124.2; 124.3, 124.4) are chosen to be slightly different from the grating constant of the material measure (10; 110) or
- the grating lines of the two first and the two second grating structures (24.1, 24.2, 24.3, 24.4; 124.1, 124.2; 124.3, 124.4) are arranged at an angle deviating from 0° with respect to the grating lines of the material measure (10; 110).

17. Position measuring device according to Claim 12 or 13, **characterized in that** an optically effective window region (28.3) is provided in the beam path, the beams emitted by the light source (21) passing through said window region before the first impingement on the material measure (110), wherein a deflection grating is arranged in the optically effective window region (28.3), the grating lines of said deflection grating extending parallel to the measurement direction (x).

## Revendications

1. Dispositif de mesure de position destiné à la détection de la position relative d'une unité de balayage ainsi que d'une mesure matérialisée mobile par rapport à celle-ci dans au moins une direction de mesure, dans lequel l'unité de balayage comprend plusieurs structures de réseau ainsi qu'au moins un élément réflecteur, **caractérisé,**
- **en ce que** les éléments sont disposés dans l'unité de balayage (20; 120) de manière à ce que les faisceaux diffractés par la mesure matérialisée (10; 110) se propagent dans la direction de l'unité de balayage (20; 120), où ils passent à travers des premières structures de réseau (24.1, 24.2; 124.1, 124.2), puis sont incidents sur l'élément réflecteur (26.1, 26.2; 126.1, 126.2), sur lequel il se produit une rétroréflexion dans la direction de la mesure matérialisée (10; 110) et les faisceaux partiels passent ensuite à travers des deuxièmes structures de réseau (24.3, 24.4; 15 124.3, 124.4) puis sont de nouveau incidents sur la mesure matérialisée (10; 110) et
- dans lequel les première et deuxième structures de réseau (24.1, 24.2, 24.3, 24.4; 124.1, 124, 2; 124.3, 124.4) sont réalisées de manière à ce que, lors du passage respectif à travers les faisceaux partiels, il en résulte un effet de lentille défini sur les faisceaux partiels et
- lors du passage à travers les deuxièmes structures de réseau (24.3, 24.4; 124.3, 124.4) il en résulte au moins un effet de collimation perpendiculairement à la direction de mesure (x) sous la forme d'un effet de lentille.

2. Dispositif de mesure de position selon la revendication 1, **caractérisé en ce que** les première et deuxième structures de réseau (24. 1, 24.2, 24. 3, 24.4; 124.1, 124.2; 124.3, 124.4) sont réalisées de manière à ce que
- lors du passage à travers les premières structures de réseau (24.1, 24.2; 124.1, 124.2), il se produise en outre un effet de déviation dans la direction de mesure (x) orienté de manière antiparallèle à la direction d'incidence sous la forme d'un effet de lentille et
- lors du passage à travers les deuxièmes structures de réseau (24.3, 24.4; 124.3, 124.4) il se produise en outre un effet de déviation dans la direction de mesure (x) sous la forme d'un effet de lentille.

3. Dispositif de mesure de position selon la revendication 2, **caractérisé en ce que** les première et deuxième structures de réseau (24.1, 24.2, 24.3, 24.4; 124.1, 124.2; 124.3, 124.4) sont en outre réalisées de manière à ce qu'il se produise, du fait des effets de déviation qui résultent des première et deuxième traversées, un déplacement des faisceaux entre le points d'incidence des faisceaux partiels sur les première et deuxième structures de réseau (24.1, 24.2, 24.3, 24.4; 124.1, 124.2; 124.3, 124.4).

4. Dispositif de mesure de position selon au moins l'une des revendications précédentes, **caractérisé en ce que** les première et deuxième structures de réseau (24.1, 24.2, 24.3, 24.4; 124.1, 124.2; 124.3, 124.4) sont réalisés sous la forme de réseaux de phase qui suppriment la diffraction d'ordre 0.

5. Dispositif de mesure de position selon la revendication 4, **caractérisé en ce que** les première et deuxième structures de réseau (24.1, 24.2, 24.3, 24.4; 124.1, 124.2; 124.3, 124.4) sont réalisées sous la forme de de réseaux de phase blazés.

6. Dispositif de mesure de position selon au moins l'une des revendications précédentes, **caractérisé en ce que** les première et deuxième structures de réseau (24.1, 24.2, 24.3, 24.4; 124.1, 124.2; 124.3, 124.4) comportent des lignes de réseau incurvées qui sont disposées de manière équidistante dans la direction de mesure (x).

7. Dispositif de mesure de position selon au moins l'une des revendications précédentes, **caractérisé en ce que** l'au moins un élément réflecteur (26.1, 26.2; 126.1, 126.2) est réalisé sous la forme d'un réflecteur à miroir plan.

8. Dispositif de mesure de position selon la revendication 7, **caractérisé en ce que** le réflecteur à miroir plan est disposé dans l'unité de balayage (20; 120) parallèlement à la mesure matérialisée (10; 110).

9. Dispositif de mesure de position selon la revendication 7, **caractérisé en ce que** l'unité de balayage comprend un substrat de support transparent (40; 50), dont la face tournée vers la mesure matérialisée comporte les première et deuxième structures de réseau (44.1, 44.2; 54.1, 54.2), et le réflecteur à miroir plan (46,1, 56,1) est
- soit disposé sur la face du substrat de support (40) qui est opposée à celui-ci, la face réfléchissante du réflecteur à miroir plan (46,1) étant orientée dans la direction de la mesure matérialisée,
- soit disposé sur la même face du substrat de support (50), la face réfléchissante du réflecteur à miroir plan (56,1) étant orientée en direction opposée à la mesure matérialisée.

10. Dispositif de mesure de position selon au moins l'une des revendications précédentes, **caractérisé en ce que** les première et deuxième structures de réseau (24.1, 24.2, 24.3, 24.4; 124.1, 124.2; 124.3, 124.4) sont réalisées de manière à ce qu'un faisceau partiel collimaté incident une première fois sur la mesure matérialisée (10; 110) après la deuxième incidence sur la mesure matérialisée (10; 110) se propage de manière collimatée dans la direction de l'unité de balayage (20; 120).

11. Dispositif de mesure de position selon au moins l'une des revendications précédentes, **caractérisé en ce que** les structures de réseau (24.1, 24.2, 24.3, 24.4; 124.1, 124.2; 124.3, 124.4) possèdent des distances focales qui correspondent à la distance optique entre les structures de réseau (24.1, 24.2, 24.3, 24.4; 124.1, 124.2; 124.3, 124.4) et l'élément réflecteur (26.1, 26.2; 126.1, 126.2).

12. Dispositif de mesure de position selon au moins l'une des revendications 2 - 11, **caractérisé en ce que** l'unité de balayage (20) est réalisée de manière à ce que les faisceaux émis par une source lumineuse (21)
- soient incidents une première fois sur la mesure matérialisée (10), qui est réalisée sous la forme d'un réseau de diffraction à lumière incidente, où il se produit une séparation en deux faisceaux partiels rétroréfléchis par rapport à l'unité de balayage (20), lesquels faisceaux partiels correspondent à deux ordres de diffraction différents,
- les deux faisceaux partiels rétroréfléchis dans l'unité de balayage (20) passent à travers deux premières structures de réseau (24.1, 24.2) dans la direction de deux éléments réflecteurs (26.1, 26.2) et subissent de ce fait un effet de déviation orienté de manière antiparallèle à la direction d'incidence et subissent uniquement un effet de focalisation perpendiculairement à la direction de mesure (x),
- les faisceaux partiels ainsi déviés et focalisés sont ensuite incidents sur les éléments réflecteurs (26.1, 26.2) et subissent une rétroréflexion dans la direction de la mesure matérialisée (10),
- les deux faisceaux partiels rétroréfléchis passent ensuite à travers deux deuxièmes structures de réseau (24.3, 24.4) dans la direction de la mesure matérialisée (10) et subissent de ce fait un effet de déviation dans la direction de mesure (x) et subissent uniquement un effet de collimation perpendiculairement à la direction de mesure (x),
- les deux faisceaux partiels sont ensuite de nouveau incidents sur la mesure matérialisée (10), où il se produit une nouvelle diffraction et une nouvelle rétroréflexion des faisceaux partiels dans la direction de l'unité de balayage (20).

13. Dispositif de mesure de position selon au moins l'une des revendications 2-11, **caractérisé en ce que** l'unité de balayage (120) est réalisée de manière à ce que les faisceaux émis par une source lumineuse (121)
- soient incidents une première fois sur la mesure matérialisée (110), qui est réalisés sous la forme d'un réseau de diffraction à lumière incidente, où il se produit une séparation en deux faisceaux partiels rétroréfléchis par rapport à l'unité de balayage (120), qui correspondent à deux ordres de diffraction différents,
- les deux faisceaux partiels rétroréfléchis dans l'unité de balayage passent à travers deux premières structures de réseau (124.1, 124.2) dans la direction de deux éléments réflecteurs (126.1, 126.2) et subissent de ce fait un effet de déviation orienté de manière antiparallèle à la direction d'incidence ainsi qu'un effet de focalisation aussi bien dans la direction de mesure (x) que perpendiculairement à la direction de mesure (x),
- les faisceaux partiels ainsi déviés et focalisés sont ensuite incidents sur les éléments réflecteurs (126.1, 126.2) et subissent une rétroréflexion dans la direction de la mesure matérialisée (110),
- les deux faisceaux partiels rétroréfléchis passent ensuite à travers deux deuxièmes structures de réseau (124.3, 124.4) dans la direction de la mesure matérialisée (110) et subissent de ce fait un effet de déviation dans la direction de mesure ainsi qu'un effet de collimation tant dans la direction de mesure (x) que perpendiculairement à la direction de mesure (x),
- les deux faisceaux partiels sont ensuite de nouveau incidents sur la mesure matérialisée (110), où il se produit une nouvelle diffraction et une nouvelle rétroréflexion de faisceaux partiels dans la direction de l'unité de balayage (120).

14. Dispositif de mesure de position selon la revendication 12 ou 13, **caractérisé en ce que**, après la deuxième rétroréflexion, des faisceaux partiels rétroréfléchis perpendiculairement à la mesure matérialisée (10; 110) dans la direction de l'unité de balayage (20; 120) sont incidents de manière superposée sur un réseau de séparation (32; 132), où il se produit une séparation en plusieurs directions spatiales et les faisceaux partiels séparés dans les différentes directions spatiales sont incidents sur plusieurs détecteurs (29.1, 29.2, 29.3; 129.1, 129.2, 129.3) d'un système de détecteur optoélectronique, où il se produit respectivement un signal de balayage modulé en fonction du décalage dans le cas du mouvement relatif de l'unité de balayage (20; 120) et de la mesure matérialisée (10; 110).

15. Dispositif de mesure de position selon la revendication 14, **caractérisé en ce que** des éléments optiques polarisants (31,1, 31,2; 131,1, 131,2) sont disposés sur le chemin de faisceau soit entre les éléments réflecteurs (26.1, 26.2; 126.1, 126.2) et les deuxièmes structures de réseau (24.3, 24.4; 124.3, 124.4) soit entre les deuxièmes structures de réseau (24.3, 24.4; 124.3, 124.4) et la mesure matérialisée (10; 110), lesquels éléments optiques polarisants sont soumis aux faisceaux partiels après la rétroréflexion sur l'élément réflecteur (26.1, 26.2; 126.1, 126.2) et transforment les faisceaux partiels polarisés linéairement en des faisceaux partiels polarisés circulairement.

16. Dispositif de mesure de position selon la revendication 12 ou 13, **caractérisé en ce que**
- soit les constantes de réseau moyennes des deux premières et des deux deuxièmes structures de réseau (24.1, 24.2, 24.3, 24.4; 124.1, 124.2; 124.3, 124.4) sont sélectionnées de manière à être peu différentes des constantes de réseau de la mesure matérialisée (10; 110), soit
- les traits de réseau des deux premières et des deux deuxièmes structures de réseau (24.1, 24.2, 24.3, 24.4; 124.1, 124.2; 124.3, 124.4) sont disposées sous un angle s'écartant de 0° par rapport aux traits de réseau de la mesure matérialisée (10; 110).

17. Dispositif de mesure de position selon la revendication 12 ou 13, **caractérisé en ce qu'**il est prévu une région de fenêtre (28.3) optiquement active dans le chemin de faisceau, qui est traversée par les faisceaux émis par la source lumineuse (21) avant la première incidence sur la mesure matérialisée (110), dans lequel un réseau de déviation, dont les traits de réseau s'étendent parallèlement à la direction de mesure (x), est disposé dans la région de fenêtre (28.3) optiquement active.
